# FASCICULE DE BREVET EUROPEEN

(11) **EP 3 211 855 B1**
(45) Date de publication et mention de la délivrance du brevet: **20.08.2025**
(21) Numéro de dépôt: 17155487.6
(22) Date de dépôt: 09.02.2017
(51) Int. Cl.: H04L 67/125, H04L 9/40, G07B 15/00, H04W 4/80, H04W 4/20, H04W 12/069

(54) **METHODE ET SYSTEME D'ECHANGE DE DONNEES ENTRE UTILISATEURS D'UN VEHICULE**
METHODE UND SYSTEM ZUM AUSTAUSCH VON INFORMATIONEN ZWISCHEN DEN BENUZERN EINES FAHRZEUGS
METHOD AND SYSTEM FOR EXCHANGING INFORMATION BETWEEN THE USERS OF A VEHICLE

(30) Priorité: 29.02.2016 FR 1651672
(43) Date de publication de la demande: 30.08.2017
(73) Titulaire: DUS Operating, Inc., Auburn Hills, MI 48326 (US)
(72) Inventeur: THOORIS, Arnaud Georges, 92190 Meudon (FR); ROCHÈS, Mickaël, 78470 Saint-Remy-Lès-Chevreuse (FR)
(74) Mandataire: Ipsilon Lyon

(56) Documents cités:
- WO-A1-2014/146196
- US-A1- 2013 259 232
- US-A1- 2015 143 468
- US-B1- 9 189 900

## Description

La présente invention concerne une méthode et un système d'échange de données entre utilisateurs d'un véhicule, de préférence équipé d'un dispositif d'entrée sans clé (« *keyless entry system* » en anglais). L'invention est définie par les revendications indépendantes 1, 9 et 10.

Le domaine de l'invention est celui des échanges d'informations relatives aux véhicules automobiles, notamment des échanges d'informations pour le partage d'un véhicule équipé d'un dispositif d'entrée sans clé. Les documents US 9 189 900 et WO2014/146196 sont pertinents dans ce domaine.

De manière connue, un tel dispositif d'entrée sans clé est associé à une carte électronique, portée par un utilisateur du véhicule. Cette carte est configurée pour établir une communication sans fil avec le dispositif d'entrée sans clé, autorisant l'utilisateur à accéder au véhicule, lorsque la carte est située à une distance prédéterminée du dispositif.

De nos jours, il est connu d'utiliser un téléphone mobile en remplacement de la carte électronique. Une application informatique dédiée est installée sur le téléphone, lui permettant ainsi d'établir une communication sans fil avec le dispositif d'entrée sans clé. Cela permet de réduire le nombre de dispositifs électroniques portés par le conducteur.

En pratique, plusieurs utilisateurs peuvent se prêter et piloter tour à tour un même véhicule. Echanger une carte électronique nécessite une rencontre physique entre les utilisateurs.

En revanche, échanger une clé d'identification numérique permettant d'accéder au véhicule ne nécessite pas de rencontre physique. Un tel échange peut être réalisé par exemple via les téléphones mobiles des utilisateurs.

Cependant, la clé d'identification numérique est complexe. Elle est constituée de plusieurs dizaines de caractères cryptés qui n'ont pas de sens pour les utilisateurs. Copier cette clé « manuellement » dans un SMS ou un email n'est absolument pas pratique pour un utilisateur, d'autant plus que la complexité de la clé est source d'erreur dans les copies. De même, récupérer la clé dans un SMS ou un email pour l'insérer dans une application de smartphone n'est pas simple pour tout le monde.

Le but de la présente invention est de proposer une méthode et un système améliorés d'échange de données relatives à un véhicule automobile.

A cet effet, l'invention a pour objet une méthode d'échange de données entre utilisateurs d'un véhicule, incluant un utilisateur principal ayant un premier dispositif électronique personnel et un utilisateur secondaire ayant un second dispositif électronique personnel, la méthode incluant une phase préparatoire comprenant les étapes suivantes :
1a) une première adresse email appartenant à l'utilisateur principal est enregistrée dans le premier dispositif électronique personnel, et une application dédiée est installée sur le premier dispositif électronique personnel ;
1b) l'application installée sur le premier dispositif électronique personnel se connecte à un nuage informatique ;
1c) le nuage informatique attribue un premier identifiant mobile à l'application installée sur le premier dispositif électronique personnel ;
1d) l'application installée sur le premier dispositif électronique personnel envoie à un serveur distant des données incluant la première adresse email et le premier identifiant mobile ;
2a) une seconde adresse email appartenant à l'utilisateur secondaire est enregistrée dans le second dispositif électronique personnel, et une application dédiée est installée sur le deuxième dispositif électronique personnel ;
2b) l'application installée sur le second dispositif électronique personnel se connecte au nuage informatique ;
2c) le nuage informatique attribue un second identifiant mobile à l'application installée sur le second dispositif électronique personnel ;
2d) l'application installée sur le second dispositif électronique personnel envoie au serveur distant des données incluant la seconde adresse email et le second identifiant mobile ;
la méthode incluant en outre une phase de transmission comprenant les étapes suivantes:
3a) l'application installée sur le premier dispositif électronique personnel envoie au serveur distant des données incluant la seconde adresse email et des instructions de transfert d'informations relatives au véhicule ;
3b) le serveur distant envoie au nuage informatique des données incluant le second identifiant mobile et les informations relatives au véhicule ;
3c) le nuage informatique envoie à l'application installée sur le second dispositif électronique personnel les informations relatives au véhicule.

Ainsi, l'invention permet l'échange de données relatives au véhicule de manière pratique, efficace et sécurisée. L'invention permet d'automatiser les échanges, sans que les utilisateurs n'aient à se soucier de la clé d'identification numérique. Tous ces échanges sont réalisés via les applications dédiées, exécutées sur les dispositifs électroniques personnels. Les seules données manipulées par les utilisateurs sont des adresses email, ce qui est commun et relativement simple.

D'autres caractéristiques avantageuses de l'invention, prises isolément ou en combinaison, apparaitront à la lecture de la description ci-après.

De préférence dans l'étape 3c), le nuage informatique utilise le second identifiant mobile pour identifier un identifiant provisoire attribué temporairement au second dispositif électronique personnel, tel qu'une adresse IP, puis utilise cet identifiant provisoire pour envoyer les informations relatives au véhicule au second dispositif électronique personnel.

Selon un mode de réalisation préféré, la phase préparatoire comprend également une étape 1e) dans laquelle le serveur distant envoie au premier dispositif électronique personnel certaines données relatives au véhicule. En particulier, ces données peuvent être envoyées à l'application informatique dédiée installée sur le premier dispositif électronique personnel.

Selon un mode de réalisation particulier, les informations relatives au véhicule comprennent des paramètres personnalisables du véhicule, incluant par exemple la position des sièges, le réglage du dispositif de climatisation et chauffage, et la programmation de la radio.

Selon un mode de réalisation avantageux, le véhicule est équipé d'un dispositif d'entrée sans clé. Dans ce cas, les informations relatives au véhicule comprennent une clé d'identification. Une fois reçue par l'application installée sur le premier dispositif électronique personnel ou sur le second dispositif électronique personnel, la clé d'identification autorise une connexion de ce premier ou second dispositif électronique personnel au dispositif d'entrée sans clé pour accéder au véhicule.

De préférence, le premier dispositif électronique personnel est un téléphone mobile. En alternative, le premier dispositif électronique personnel est une montre électronique, une tablette numérique ou une carte d'entrée passive.

De même, de préférence, le second dispositif électronique personnel est un téléphone mobile. En alternative, le second dispositif électronique personnel est une montre électronique, une tablette numérique ou une carte d'entrée passive.

L'invention a également pour objet un système d'échange de données entre utilisateurs d'un véhicule, incluant un utilisateur principal et un utilisateur secondaire. Le système comprend :
- un véhicule pilotable par l'utilisateur principal ou l'utilisateur secondaire ;
- un premier dispositif électronique personnel portable par l'utilisateur principal et configuré pour stocker une première adresse email appartenant à l'utilisateur principal et pour exécuter une application dédiée ;
- un second dispositif électronique personnel portable par l'utilisateur secondaire et configuré pour stocker une seconde adresse email appartenant à l'utilisateur secondaire et pour exécuter une application dédiée ;
- un nuage informatique configuré pour attribuer, d'une part, un premier identifiant mobile à l'application installée sur le premier dispositif électronique personnel et, d'autre part, un second identifiant mobile à l'application installée sur le second dispositif électronique personnel ;
- un serveur distant configuré pour stocker des données incluant la première adresse email et le premier identifiant mobile reçus du premier dispositif électronique personnel, ainsi que la seconde adresse email et le second identifiant mobile reçus du second dispositif électronique personnel ; et
- une chaine de communication depuis le premier dispositif électronique personnel vers le second dispositif électronique personnel, configurée de sorte que lorsque l'application installée sur le premier dispositif électronique personnel envoie au serveur distant des données incluant la seconde adresse email et des instructions de transfert d'informations relatives au véhicule, alors le serveur distant envoie au nuage informatique des données incluant le second identifiant mobile et les informations relatives au véhicule, puis le nuage informatique envoie les informations relatives au véhicule à l'application installée sur le second dispositif électronique personnel.

L'invention a également pour objet une application informatique, configurée pour être installée puis exécutée sur un dispositif électronique personnel, l'application comprenant des portions de code pour l'exécution des étapes 1b) à 1d) ou 2b) à 2d), ainsi que des portions de code pour l'exécution des étapes 3a) et/ou 3c), de la méthode définie ci-dessus, lorsque l'application est exécutée sur le dispositif électronique personnel.

De préférence, l'application comprend des portions de codes pour l'exécution des étapes 1e), 1f) et 3d) détaillées ci-après.

L'invention sera mieux comprise à la lecture de la description qui va suivre, donnée uniquement à titre d'exemple non limitatif et faite en référence aux dessins annexés sur lesquels :
- la figure 1 est une représentation schématique d'un système 100 d'échanges de données conforme à l'invention ;
- les figures 2 et 3 sont des représentations schématiques analogues à la figure 1, illustrant respectivement la phase préparatoire et la phase de transmission de la méthode d'échange de données conforme à l'invention.

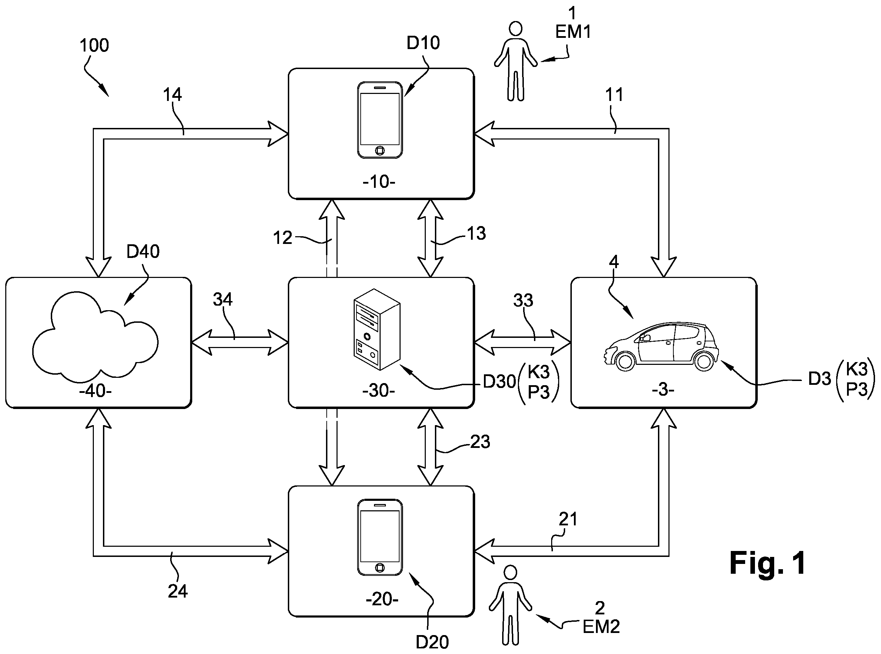

Dans le mode de réalisation préféré montré aux figures 1 à 3, le système 100 comprend un véhicule automobile 3, un premier téléphone mobile 10, un second téléphone mobile 20, un serveur de données distant 30 et un nuage informatique 40.

Le véhicule 3 est conçu pour être piloté par un utilisateur, qui est alors le conducteur. Le véhicule 3 est pilotable en alternance par différents utilisateurs, incluant un utilisateur principal 1 et un utilisateur secondaire 2.

Généralement, l'utilisateur principal 1 est le propriétaire du véhicule 3, tandis que l'utilisateur secondaire 2 est un collègue, un ami ou un membre de la famille de l'utilisateur principal 1.

Le téléphone 10 appartient à l'utilisateur 1, tandis que le téléphone 20 appartient à l'utilisateur 2.

Le véhicule 3 comporte des paramètres P3 réglables, qui sont personnalisables par les utilisateurs 1 et 2. A titre d'exemples, ces paramètres P3 peuvent inclure la position des sièges, le réglage du dispositif de climatisation et chauffage, et la programmation de la radio. D'autres paramètres P3 du véhicule 3 peuvent être personnalisés sans sortir du cadre de l'invention.

Le véhicule 3 est équipé d'un dispositif d'entrée sans clé 4 (« *keyless entry system »* en anglais). Le dispositif 4 permet l'ouverture et la fermeture automatique des ouvrants du véhicule 3 par l'utilisateur 1 ou 2 sans disposer d'une clé introduite dans une serrure. Les ouvrants comprennent les portes et le coffre du véhicule 3.

En revanche, une clé d'identification K3 numérique est associée au véhicule 3, plus précisément au dispositif 4. Une fois reçue par le téléphone 10 depuis le serveur 30, cette clé K3 autorise une connexion du téléphone 10 au dispositif 4 pour permettre à l'utilisateur 1 d'accéder au véhicule 3. De même, une fois reçue par le téléphone 20, sous certaines conditions définies ci-après, la clé K3 autorise une connexion du téléphone 20 au dispositif 4 pour permettre à l'utilisateur 2 d'accéder au véhicule 3.

Initialement, la clé K3 est enregistrée de manière sécurisée dans le dispositif 4 et dans le serveur 30.

Les téléphones 10 et 20 sont des téléphones intelligents (« *smartphone »* en anglais), configurés pour communiquer selon différents standards de communication sans fil (notamment LTE, NFC, Bluetooth, Wifi, etc...) et pour exécuter différentes applications.

Dans le cadre de l'invention, chacun des téléphones 10 et 20 constitue un dispositif électronique personnel (« *personal electronic device* » en anglais), porté par son utilisateur 1 ou 2 respectif.

Comme détaillé ci-après, les téléphones 10 et 20 peuvent se connecter au dispositif d'entrée sans clé 4 du véhicule 3, de préférence via une application dédiée. L'application est référencée A10 sur le téléphone 10 et A20 sur le téléphone 20, étant entendu qu'il s'agit d'une même application informatique. Les téléphones 10 et 20 peuvent également se connecter au serveur 30, via cette même application A10 ou A20. Les téléphones 10 et 20 peuvent par ailleurs se connecter au nuage 40 via d'autres applications, comme par exemple un navigateur internet.

Le serveur 30 est dédié au stockage de données relatives au véhicule 3, notamment la clé d'identification K3, mais également de données relatives aux téléphones 10 et 20 configurés pour se connecter au véhicule 3.

La clé K3 est transmise au téléphone 10 par le serveur 30 lorsque l'utilisateur 1 installe l'application A10 sur son téléphone 10, puis s'identifie auprès du serveur 30 en tant qu'utilisateur principal du véhicule 3.

En revanche, comme l'utilisateur 2 n'est pas l'utilisateur principal du véhicule 3, le serveur 30 ne peut pas transmettre directement la clé K3 au téléphone 20 pour lui permettre d'accéder au véhicule 3.

Après installation de l'application A10, le téléphone 10 est configuré pour établir une communication sans fil 13 avec le serveur 30. De même, après installation de l'application A20, le téléphone 20 est configuré pour établir une communication sans fil 23 avec le serveur 30. Les communications 13 et 23 utilisent de préférence un standard Wifi, LTE, ou tout autre standard mobile avancé.

L'utilisateur 1 peut télécharger des paramètres d'initialisation propres au véhicule 3, depuis le serveur 30 vers son téléphone 10. Par la suite, les paramètres utilisateur P10 enregistrés sur le téléphone 10 incluent les paramètres d'initialisation.

En pratique, les paramètres d'initialisation sont nécessaires au téléphone 10 pour établir la communication 10 avec le véhicule 3. Ces paramètres d'initialisation comprennent par exemple l'adresse Bluetooth du véhicule 1 et la clé d'identification K3. Ainsi, la communication 11 est établie automatiquement lorsque le téléphone 10 est situé à une distance prédéterminée du dispositif 4 et comporte les paramètres d'initialisation téléchargés depuis le serveur 30, incluant la clé K3.

Les paramètres d'initialisation peuvent également inclure des valeurs par défaut correspondant aux paramètres P3 réglables du véhicule 3, tels que la position des sièges, le réglage du dispositif de climatisation et chauffage, et la programmation de la radio.

D'autres paramètres d'initialisation peuvent être prévus sans sortir du cadre de l'invention.

Après installation de l'application A10 dédiée et récupération de la clé K3, le téléphone 10 est configuré pour établir une communication sans fil 11 avec le véhicule 3. De même, après installation de l'application A20 dédiée, le téléphone 20 est configuré pour établir une communication sans fil 21 avec le véhicule 3 mais ne dispose pas de la clé K3, dans la mesure où l'utilisateur 2 n'est pas l'utilisateur principal du véhicule 3. Les communications 11 et 21 utilisent de préférence un standard NFC (« *Near Field Communication* » en anglais) et/ou un standard Bluetooth.

Le téléphone 10 est configuré pour transmettre la clé K3 au dispositif 4 via l'application A10 et la communication 11, afin d'autoriser l'utilisateur 1 à accéder au véhicule 3. Dans ce cas, la communication 11 utilise le standard NFC et les échanges de données sont sécurisés. De préférence, la communication 11 est établie automatiquement lorsque le téléphone 10 est situé à une distance prédéterminée du dispositif 4.

De même, le téléphone 20 peut transmettre la clé K3 au dispositif 4 via l'application A20 et la communication 21, lorsque le téléphone 20 dispose effectivement de la clé K3.

Dans le téléphone 10 peuvent être enregistrés des paramètres utilisateur P10, correspondant aux paramètres P3 réglables du véhicule 3. Plus précisément, les paramètres utilisateurs P10 sont enregistrés dans l'application A10. Le téléphone 10 est configuré pour actualiser les paramètres P3 du véhicule 3 avec ses paramètres utilisateur P10, via l'application A10 et la communication 11. Dans ce cas, la communication 11 utilise le standard Bluetooth. Lorsque l'utilisateur modifie les paramètres P3 du véhicule 3 en cours d'utilisation, que ce soit à l'arrêt ou en circulation, les paramètres P10 sont automatiquement actualisés dans le téléphone 10 via la communication 11. Par ailleurs, les paramètres P10 peuvent être modifiés par l'utilisateur directement sur le téléphone 10, par exemple via l'application A10.

De même, dans le téléphone 20 peuvent être enregistrés des paramètres utilisateur P20, correspondant aux paramètres P3 réglables du véhicule 3. Plus précisément, les paramètres utilisateurs P20 sont enregistrés dans l'application A20.

Le nuage informatique 40 (« *cloud* » en anglais) est un ensemble de matériel, réseaux et logiciels informatiques interconnectés et accessibles depuis n'importe où dans le monde.

Le nuage 40 peut être celui proposé par un prestataire de services, tels que Google ou Apple.

Le téléphone 10 est configuré pour établir une communication sans fil 14 avec le nuage 40. De même, le téléphone 20 est configuré pour établir une communication sans fil 24 avec le nuage 40. Les communications 14 et 24 utilisent de préférence un standard Wifi, LTE, ou tout autre standard mobile avancé.

Les téléphones 10 et 20 sont configurés pour établir une communication sans fil 12 entre eux. La communication 12 utilise un standard GSM, LTE, ou tout autre standard mobile. Cependant, cette communication 12 est limitée aux appels téléphoniques, ainsi qu'à l'envoi de messages SMS et MMS.

Pour les échanges de données plus complexes, par exemple les emails, les téléphones 10 et 20 peuvent se connecter au nuage 40 via les communications 14 et 24.

Pour certains échanges de données particulières, notamment relatives au véhicule 3, les téléphones 10 et 20 peuvent se connecter au serveur 30 via les communications 13 et 23.

En pratique, le système 100 peut être conformé différemment des figures 1 à 3 sans sortir du cadre de l'invention.

En variante, le téléphone 10 et/ou 20 peut être remplacé par une montre électronique, une tablette numérique, ou une carte d'entrée passive (« *passive entry card* »), constituant alors le dispositif électronique personnel présentant les caractéristiques détaillées ci-dessus pour le téléphone 10. D'autres dispositifs électroniques personnels peuvent être mis en œuvre sans sortir du cadre de l'invention.

Selon une autre variante, le système 100 peut comprendre plus de deux dispositifs électroniques personnels 10 et 20 associés au dispositif 4 équipant le véhicule 3.

Selon une autre variante, le système 100 peut comprendre plusieurs véhicules 3 équipés de dispositifs d'entrée sans clé 4 associés au même téléphone 10.

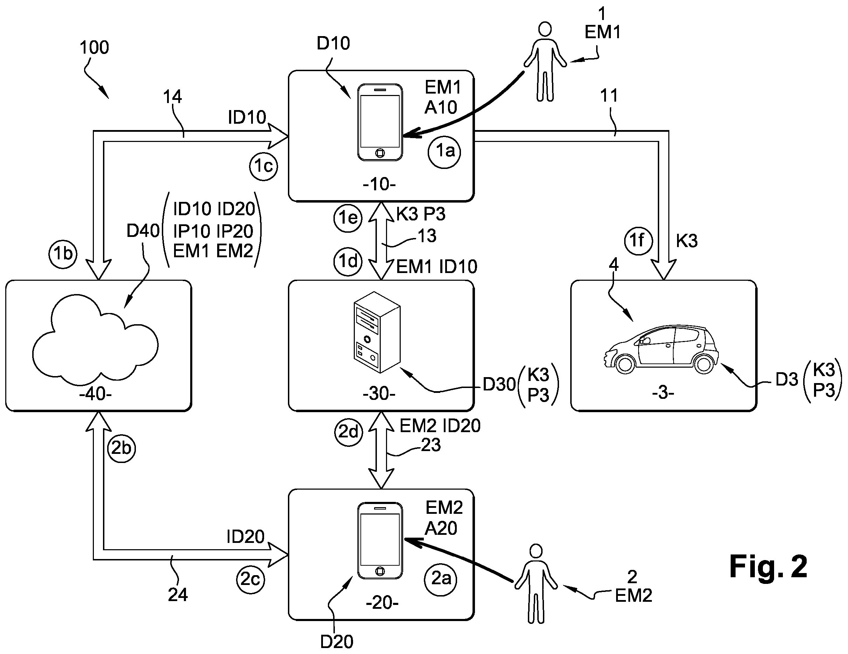

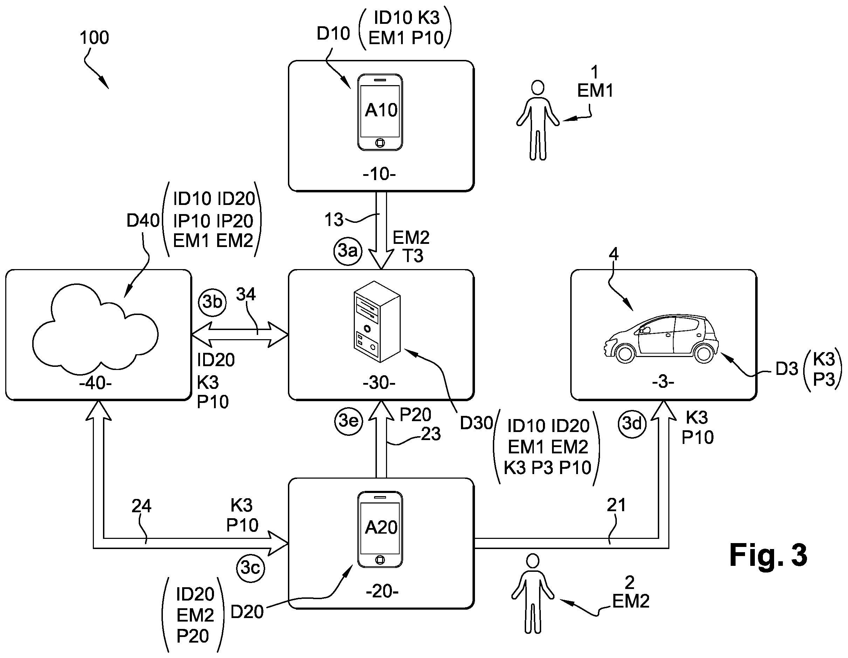

La méthode d'échange de données conforme à l'invention, entre les utilisateurs 1 et 2 du véhicule 3, comprend une phase préparatoire et une phase de transmission. Cette méthode est détaillée ci-après en référence aux figures 2 et 3, ainsi qu'aux tableaux 1 à 5 :
- le tableau 1 montre les différentes données mises en œuvre dans la méthode selon l'invention ;
- le tableau 2 montre les données stockées par chacune entité au début de la phase préparatoire ;
- le tableau 3 montre les données stockées par chacune entité à la fin de la phase préparatoire ;
- le tableau 4 montre les données stockées par chacune entité au début de la phase de transmission ; et
- le tableau 5 montre les données stockées par chacune entité à la fin de la phase de transmission.

**Tableau 1 - Données mises en œuvre dans l'invention**

| Référence | Explication |
|---|---|
| D3 | Informations relatives au véhicule 3 |
| D10 | Données stockées sur le téléphone 10 |
| D20 | Données stockées sur le téléphone 20 |
| D30 | Données stockées sur le serveur 30 |
| D40 | Données stockées dans le nuage informatique 40 |
| EM1 | Adresse email de l'utilisateur principal 1 |
| EM2 | Adresse email de l'utilisateur secondaire 2 |
| ID10 | Identifiant mobile attribué à l'application A10 du téléphone 10 |
| ID20 | Identifiant mobile attribué à l'application A20 du téléphone 20 |
| IP10 | Identifiant provisoire attribué temporairement au téléphone 10 |
| IP20 | Identifiant provisoire attribué temporairement au téléphone 20 |
| K3 | Clé d'identification permettant à un téléphone mobile 10 ou 20 d'accéder au véhicule 3 |
| P3 | Paramètres personnalisables du véhicule 3 |
| P10 | Paramètres personnalisés de l'utilisateur 1 |
| P20 | Paramètres personnalisés de l'utilisateur 2 |

La phase préparatoire comprend des étapes 1a), 1b), 1c) et 1d) relatives à l'utilisateur 1 et au téléphone 10, ainsi que des étapes 2a), 2b), 2c) et 2d) relatives à l'utilisateur 2 et au téléphone 20.

Dans l'étape 1a), l'adresse email EM1 de l'utilisateur 1 est enregistrée dans le téléphone 10, et l'application A10 est installée sur le téléphone 10. Plus précisément, l'adresse email EM1 est enregistrée manuellement par l'utilisateur 1, tandis que l'installation A10 est téléchargée depuis internet.

Dans l'étape 1b), l'application A10 installée sur le téléphone 10 se connecte au nuage informatique 40.

Dans l'étape 1c), le nuage 40 attribue un identifiant mobile permanent ID10 à l'application A10 installée sur le téléphone et un identifiant mobile provisoire IP10 au téléphone 10. L'identifiant ID10 est dit permanent en ce qu'il est attribué définitivement à l'application A10, à moins de la désinstaller du téléphone 10. L'identifiant IP10 est dit provisoire en ce qu'il est attribué temporairement au téléphone 10, en fonction de sa location géographique. L'identifiant IP10 dépend notamment du relais mobile auquel le téléphone est connecté.

De manière classique, les étapes 1b) et 1c) sont réalisées au premier lancement de l'application A10, juste après son installation sur le téléphone 10 par l'utilisateur 1.

De préférence, l'étape 1b) est réalisée automatiquement après l'étape 1a), puis l'étape 1c) est réalisée automatiquement après l'étape 1b). Autrement dit, les étapes 1a), 1b) et 1c) sont successives, dans cet ordre-là.

Dans l'étape 1d), l'application A10 envoie au serveur 30 des données incluant l'adresse email EM1 et l'identifiant ID10.

L'étape 1d) est toujours réalisée après les étapes 1a), 1b) et 1c).

Après l'étape 1d) peut être réalisée une étape 1e), dans laquelle le serveur 30 envoie au téléphone 10, et plus précisément à l'application A10, certaines données relatives au véhicule 3, incluant la clé d'identification K3 et les paramètres personnalisables P3.

Après l'étape 1e) peut être réalisée une étape 1f), dans laquelle l'utilisateur 1 accède au véhicule 3 grâce au téléphone 10, plus précisément grâce à l'application A10 et la clé K3.

Les étapes 2a) à 2d) sont similaires aux étapes 1a) à 1d) décrites ci-dessus, excepté en ce qu'elles concernent l'utilisateur 2, le téléphone 20 et l'application A20, au lieu de concerner l'utilisateur 1, le téléphone 10 et l'application A10.

En revanche, les étapes 1e) et 1f) ne s'appliquent pas à l'utilisateur 2, qui n'est pas l'utilisateur principal du véhicule 3. De ce fait, le serveur 30 ne peut pas transmettre directement la clé K3 au téléphone 20 pour lui permettre d'accéder au véhicule 3.

**Tableau 2 - Début de la phase préparatoire**

| Entité | Données stockées |
|---|---|
| 1 | EM1, (EM2) |
| 2 | EM2, (EM1) |
| D3 | K3, P3 |
| D10 | |
| D20 | |
| D30 | K3, P3 |
| D40 | (EM1, EM2) |

**Tableau 3 - Fin de la phase préparatoire**

| Entité | Données stockées |
|---|---|
| 1 | EM1, (EM2) |
| 2 | EM2, (EM1) |
| D3 | K3, P3, P10 |
| D10 | ID10, EM1, K3, P3, P1 |
| D20 | ID20, EM2 |
| D30 | ID10, ID20, EM1, EM2, K3, P3, P10 |
| D40 | ID10, ID20, IP10, IP20, (EM1, EM2) |

La phase de transmission comprend des étapes 3a), 3b) et 3c), qui peuvent être réalisées seulement une fois que les étapes 1d) et 2d ont été réalisées. En outre, l'utilisateur 1 doit connaître l'adresse email EM2 de l'utilisateur 2.

De manière connue, l'utilisateur 1 a la possibilité d'échanger des données avec l'utilisateur 2 soit via la communication 22, soit via la chaine de communication 14+24.

Cependant, pour échanger des informations relatives au véhicule 3, il est plus pratique et plus sûr d'utiliser l'application dédiée A10 / A20, installée sur les téléphones 10 et 20, et de faire transiter ces données via la chaine de communication 13+34+24.

A cet effet, l'utilisateur 1 déclenche manuellement et volontairement la phase de transmission détaillée ci-après.

Dans l'étape 3a), l'application A10 installée sur le téléphone 10 envoie au serveur 30 des données incluant l'adresse email EM2 et des instructions de transfert T3 d'informations K3 et/ou P10 relatives au véhicule 3.

Dans l'étape 3b), en réponse aux instructions T3, le serveur 30 envoie au nuage 40 des données incluant l'identifiant mobile ID20 et les informations K3 et/ou P10 relatives au véhicule 3.

Dans l'étape 3c), le nuage 40 envoie à l'application A20 installée sur le téléphone 20 les informations K3 et/ou P10 relatives au véhicule 3.

Avantageusement, les informations sont cryptées à chaque étape de la transmission.

Selon un mode de réalisation préféré de l'étape 3c), le nuage 40 utilise l'identifiant permanent ID20 pour identifier l'identifiant provisoire IP20 attribué à ce moment-là au second dispositif électronique personnel 20. Le nuage 40 utilise ensuite cet identifiant provisoire IP20 pour envoyer au téléphone 20 les informations K3 et/ou P10 relatives au véhicule 3.

De préférence dans les étapes 3a) à 3c), les informations relatives au véhicule 3 comprennent au moins la clé d'identification K3.

Dans ce cas, après l'étape 3c) peut être réalisée une étape 3d), dans laquelle l'utilisateur 2 accède au véhicule 3 grâce au téléphone 20, plus précisément grâce à l'application A20 et la clé K3.

En alternative ou en complément, les informations relatives au véhicule 3 peuvent comprendre les paramètres personnalisés P10 définis par l'utilisateur 1.

D'autres informations relatives au véhicule 3 peuvent être transmises en mettant en œuvre la méthode définie ci-dessus, sans sortir du cadre de l'invention.

Ainsi, l'invention permet l'échange de données entre utilisateurs de manière pratique, efficace et sécurisée.

Cet échange est plus complexe qu'un envoi de SMS ou d'email, mais nécessite moins d'opérations manuelles des utilisateurs grâce à l'application dédiée et est plus sécurisé.

**Tableau 4 - Début de la phase de transmission**

| Entité | Données stockées |
|---|---|
| 1 | EM1, EM2 |
| 2 | EM2, (EM1) |
| D3 | K3, P3, P10 |
| D10 | ID10, EM1, K3, P3, P10 |
| D20 | ID20, EM2 |
| D30 | ID10, ID20, EM1, EM2, K3, P3, P10 |
| D40 | ID10, ID20, IP10, IP20, (EM1, EM2) |

**Tableau 5 - Fin de la phase de transmission**

| Entité | Données stockées |
|---|---|
| 1 | EM1 |
| 2 | EM2 |
| D3 | K3, P3, P20 |
| D10 | ID10, EM1, K3, P3, P10 |
| D20 | ID2, EM2, K3, P10, P20 |
| D30 | ID10, ID20, EM1, EM2, K3, P3, P10, P20 |
| D40 | ID1, ID2, IP1, IP2, (EM1, EM2) |

En pratique, les caractéristiques techniques des différents modes de réalisation et variantes mentionnés ci-dessus peuvent être, en totalité ou pour certaines d'entre elles, combinées entre elles.

Ainsi, la méthode et le système d'échanges de données peuvent être adaptés en termes de coûts, d'ergonomie, de fonctionnalités et de performances.

## Revendications

1. Méthode d'échange de données entre utilisateurs (1 ; 2) d'un véhicule (3), incluant un utilisateur principal (1) ayant un premier dispositif électronique personnel (10) et un utilisateur secondaire (2) ayant un second dispositif électronique personnel (20), la méthode incluant une phase préparatoire comprenant les étapes suivantes :
1a) une première adresse email (EM1) appartenant à l'utilisateur principal (1) est enregistrée dans le premier dispositif électronique personnel (10), et une application (A10) dédiée est installée sur le premier dispositif électronique personnel (10) ;
1b) l'application (A10) installée sur le premier dispositif électronique personnel (10) se connecte à un nuage informatique (40) ;
1c) le nuage informatique (40) attribue un premier identifiant mobile (ID10) à l'application (A10) installée sur le premier dispositif électronique personnel (10) ;
1d) l'application (A10) installée sur le premier dispositif électronique personnel (10) envoie à un serveur distant (30) des données incluant la première adresse email (EM1) et le premier identifiant mobile (ID10) ;
2a) une seconde adresse email (EM2) appartenant à l'utilisateur secondaire (2) est enregistrée dans le second dispositif électronique personnel (20), et une application (A20) dédiée est installée sur le deuxième dispositif électronique personnel (20) ;
2b) l'application (A20) installée sur le second dispositif électronique personnel (20) se connecte au nuage informatique (40) ;
2c) le nuage informatique (40) attribue un second identifiant mobile (ID20) à l'application (A20) installée sur le second dispositif électronique personnel (20) ;
2d) l'application (A20) installée sur le second dispositif électronique personnel (20) envoie au serveur distant (30) des données incluant la seconde adresse email (EM2) et le second identifiant mobile (ID20) ;
la méthode incluant en outre une phase de transmission comprenant les étapes suivantes :
3a) l'application (A10) installée sur le premier dispositif électronique personnel (10) envoie au serveur distant (30) des données incluant la seconde adresse email (EM2) et des instructions de transfert (T3) d'informations (K3 ; P10) relatives au véhicule (3) ;
3b) le serveur distant (30) envoie au nuage informatique (40) des données incluant le second identifiant mobile (ID20) et les informations (K3 ; P10) relatives au véhicule (3) ;
3c) le nuage informatique (40) envoie à l'application (A20) installée sur le second dispositif électronique personnel (20) les informations (K3 ; P10) relatives au véhicule (3).

2. Méthode selon la revendication 1, **caractérisée en ce que** dans l'étape 3c), le nuage informatique (40) utilise le second identifiant mobile (ID20) pour identifier un identifiant provisoire (IP20) attribué temporairement au second dispositif électronique personnel (20), puis utilise cet identifiant provisoire (IP20) pour envoyer les informations (K3 ; P10) relatives au véhicule (3) au second dispositif électronique personnel (20).

3. Méthode selon l'une des revendications précédentes, **caractérisée en ce que** la phase préparatoire comprend également une étape 1e) dans laquelle le serveur distant (30) envoie au premier dispositif électronique personnel (10) certaines données (K3, P3) relatives au véhicule (3).

4. Méthode selon l'une des revendications précédentes, **caractérisée en ce que** les informations (K3 ; P10) relatives au véhicule (3) comprennent des paramètres personnalisables (P10) du véhicule (3), incluant par exemple la position des sièges, le réglage du dispositif de climatisation et chauffage, et la programmation de la radio.

5. Méthode selon l'une des revendications précédentes, **caractérisée en ce que** le véhicule (3) est équipé d'un dispositif d'entrée sans clé (4), et **en ce que** les informations (K3 ; P10) relatives au véhicule (3) comprennent une clé d'identification (K3) qui, une fois reçue par l'application (A10 ; A20) installée sur le premier dispositif électronique personnel (10) ou le second dispositif électronique personnel (20), autorise une connexion au dispositif d'entrée sans clé (4) pour accéder au véhicule (3).

6. Méthode selon l'une des revendications précédentes, **caractérisée en ce que** le premier dispositif électronique personnel (10) et/ou le second dispositif électronique personnel (20) est un téléphone mobile.

7. Méthode selon l'une des revendications précédentes, **caractérisée en ce que** le premier dispositif électronique personnel (10) et/ou le second dispositif électronique personnel (20) est une montre électronique.

8. Méthode selon l'une des revendications précédentes, **caractérisée en ce que** le premier dispositif électronique personnel (10) et/ou le second dispositif électronique personnel (20) est une tablette numérique.

9. Système (100) d'échange de données entre utilisateurs (1 ; 2) d'un véhicule (3), incluant un utilisateur principal (1) et un utilisateur secondaire (2), le système (100) comprenant :
- un véhicule (3) pilotable par l'utilisateur principal (1) ou l'utilisateur secondaire (2) ;
- un premier dispositif électronique personnel (10) portable par l'utilisateur principal (1) et configuré pour stocker une première adresse email (EM1) appartenant à l'utilisateur principal (1) et pour exécuter une application (A10) dédiée ;
- un second dispositif électronique personnel (20) portable par l'utilisateur secondaire (2) et configuré pour stocker une seconde adresse email (EM2) appartenant à l'utilisateur secondaire (2) et pour exécuter une application (A20) dédiée ;
- un nuage informatique (40) configuré pour attribuer, d'une part, un premier identifiant mobile (ID10) à l'application (A10) installée sur le premier dispositif électronique personnel (10) et, d'autre part, un second identifiant mobile (ID20) à l'application (A20) installée sur le second dispositif électronique personnel (20) ;
- un serveur distant (30) configuré pour stocker des données incluant la première adresse email (EM1) et le premier identifiant mobile (ID10) reçus du premier dispositif électronique personnel (10), ainsi que la seconde adresse email (EM2) et le second identifiant mobile (ID20) reçus du second dispositif électronique personnel (20) ; et
- une chaine de communication (13, 34, 24) depuis le premier dispositif électronique personnel (10) vers le second dispositif électronique personnel (20), configurée de sorte que lorsque l'application (A10) installée sur le premier dispositif électronique personnel (10) envoie au serveur distant (30) des données incluant la seconde adresse email (EM2) et des instructions de transfert (T3) d'informations (K3 ; P10) relatives au véhicule (3), alors le serveur distant (30) envoie au nuage informatique (40) des données incluant le second identifiant mobile (ID20) et les informations (K3 ; P10) relatives au véhicule (3), puis le nuage informatique (40) envoie les informations (K3 ; P10) relatives au véhicule (3) à l'application (A10) installée sur le second dispositif électronique personnel (20).

10. Application (A10 ; A20) informatique, configurée pour être installée puis exécutée sur un dispositif électronique personnel (10 ; 20), l'application (A10 ; A20) comprenant des portions de code pour l'exécution des étapes 1b) à 1d) ou 2b) à 2d), ainsi que des portions de code pour l'exécution des étapes 3a) et 3c), de la méthode selon la revendication 1, lorsque l'application (A10 ; A20) est exécutée sur le dispositif électronique personnel (10 ; 20).

## Patentansprüche

1. Methode zum Datenaustausch zwischen Benutzern (1; 2) eines Fahrzeugs (3), einschließlich eines Hauptbenutzers (1) mit einem ersten persönlichen elektronischen Gerät (10) und eines sekundären Benutzers (2) mit einem zweiten persönlichen elektronischen Gerät (20), wobei die Methode eine Vorbereitungsphase umfasst, die die folgenden Schritte beinhaltet:
1a) Eine erste E-Mail-Adresse (EM1), die dem Hauptbenutzer (1) gehört, wird im ersten persönlichen elektronischen Gerät (10) registriert, und eine dedizierte Anwendung (A10) wird auf dem ersten persönlichen elektronischen Gerät (10) installiert;
1b) Die auf dem ersten persönlichen elektronischen Gerät (10) installierte Anwendung (A10) verbindet sich mit einem Cloud (40);
1c) Der Cloud (40) weist der auf dem ersten persönlichen elektronischen Gerät (10) installierten Anwendung (A10) eine erste mobile Kennung (ID10) zu;
1d) Die auf dem ersten persönlichen elektronischen Gerät (10) installierte Anwendung (A10) sendet einem Fernserver (30) Daten, die die erste E-Mail-Adresse (EM1) und die erste mobile Kennung (ID10) enthalten;
2a) Eine zweite E-Mail-Adresse (EM2), die dem sekundären Benutzer (2) gehört, wird im zweiten persönlichen elektronischen Gerät (20) registriert, und eine dedizierte Anwendung (A20) wird auf dem zweiten persönlichen elektronischen Gerät (20) installiert;
2b) Die auf dem zweiten persönlichen elektronischen Gerät (20) installierte Anwendung (A20) verbindet sich mit dem Cloud (40);
2c) Der Cloud (40) weist der auf dem zweiten persönlichen elektronischen Gerät (20) installierten Anwendung (A20) eine zweite mobile Kennung (ID20) zu;
2d) Die auf dem zweiten persönlichen elektronischen Gerät (20) installierte Anwendung (A20) sendet dem Fernserver (30) Daten, die die zweite E-Mail-Adresse (EM2) und die zweite mobile Kennung (ID20) enthalten;
Die Methode umfasst außerdem eine Übertragungsphase, die die folgenden Schritte beinhaltet:
3a) Die auf dem ersten persönlichen elektronischen Gerät (10) installierte Anwendung (A10) sendet dem Fernserver (30) Daten, die die zweite E-Mail-Adresse (EM2) und
Übertragungsanweisungen (T3) von Informationen (K3; P10) bezüglich des Fahrzeugs (3) enthalten;
3b) Der Fernserver (30) sendet dem Cloud (40) Daten, die die zweite mobile Kennung (ID20) und die Informationen (K3; P10) bezüglich des Fahrzeugs (3) enthalten;
3c) Der Cloud (40) sendet der auf dem zweiten persönlichen elektronischen Gerät (20) installierten Anwendung (A20) die Informationen (K3; P10) bezüglich des Fahrzeugs (3).

2. Methode nach Anspruch 1, **dadurch gekennzeichnet, dass** in Schritt 3c) der Cloud (40) die zweite mobile Kennung (ID20) verwendet, um eine vorläufige Kennung (IP20) zu identifizieren, die dem zweiten persönlichen elektronischen Gerät (20) vorübergehend zugewiesen wurde, und dann diese vorläufige Kennung (IP20) verwendet, um die Informationen (K3; P10) bezüglich des Fahrzeugs (3) an das zweite persönliche elektronische Gerät (20) zu senden.

3. Methode nach einem der vorhergehenden Ansprüche, **dadurch gekennzeichnet, dass** die Vorbereitungsphase auch einen Schritt 1e) umfasst, in dem der Fernserver (30) dem ersten persönlichen elektronischen Gerät (10) bestimmte Daten (K3, P3) bezüglich des Fahrzeugs (3) sendet.

4. Methode nach einem der vorhergehenden Ansprüche, **dadurch gekennzeichnet, dass** die Informationen (K3; P10) bezüglich des Fahrzeugs (3) anpassbare Parameter (P10) des Fahrzeugs (3) umfassen, einschließlich beispielsweise der Sitzposition, der Einstellung der Klimaanlage und Heizung sowie der Programmierung des Radios.

5. Methode nach einem der vorhergehenden Ansprüche, **dadurch gekennzeichnet, dass** das Fahrzeug (3) mit einem schlüssellosen Zugangssystem (4) ausgestattet ist und dass die Informationen (K3; P10) bezüglich des Fahrzeugs (3) einen Identifikationsschlüssel (K3) umfassen, der, sobald er von der auf dem ersten persönlichen elektronischen Gerät (10) oder dem zweiten persönlichen elektronischen Gerät (20) installierten Anwendung (A10; A20) empfangen wird, eine Verbindung zum schlüssellosen Zugangssystem (4) ermöglicht, um Zugang zum Fahrzeug (3) zu erhalten.

6. Methode nach einem der vorhergehenden Ansprüche, **dadurch gekennzeichnet, dass** das erste persönliche elektronische Gerät (10) und/oder das zweite persönliche elektronische Gerät (20) ein Mobiltelefon ist.

7. Methode nach einem der vorhergehenden Ansprüche, **dadurch gekennzeichnet, dass** das erste persönliche elektronische Gerät (10) und/oder das zweite persönliche elektronische Gerät (20) eine elektronische Uhr ist.

8. Methode nach einem der vorhergehenden Ansprüche, **dadurch gekennzeichnet, dass** das erste persönliche elektronische Gerät (10) und/oder das zweite persönliche elektronische Gerät (20) ein Tablet ist.

9. System (100) zum Datenaustausch zwischen Benutzern (1; 2) eines Fahrzeugs (3), einschließlich eines Hauptbenutzers (1) und eines sekundären Benutzers (2), wobei das System (100) umfasst:
- ein Fahrzeug (3), das vom Hauptbenutzer (1) oder vom sekundären Benutzer (2) gesteuert werden kann;
- ein erstes persönliches elektronisches Gerät (10), das vom Hauptbenutzer (1) getragen werden kann und konfiguriert ist, um eine erste E-Mail-Adresse (EM1) zu speichern, die dem Hauptbenutzer (1) gehört, und um eine dedizierte Anwendung (A10) auszuführen;
- ein zweites persönliches elektronisches Gerät (20), das vom sekundären Benutzer (2) getragen werden kann und konfiguriert ist, um eine zweite E-Mail-Adresse (EM2) zu speichern, die dem sekundären Benutzer (2) gehört, und um eine dedizierte Anwendung (A20) auszuführen;
- ein Cloud (40), konfiguriert, um einerseits eine erste mobile Kennung (ID10) der auf dem ersten persönlichen elektronischen Gerät (10) installierten Anwendung (A10) und andererseits eine zweite mobile Kennung (ID20) der auf dem zweiten persönlichen elektronischen Gerät (20) installierten Anwendung (A20) zuzuweisen;
- ein Fernserver (30), konfiguriert, um Daten zu speichern, die die erste E-Mail-Adresse (EM1) und die erste mobile Kennung (ID10) enthalten, die vom ersten persönlichen elektronischen Gerät (10) empfangen wurden, sowie die zweite E-Mail-Adresse (EM2) und die zweite mobile Kennung (ID20) enthalten, die vom zweiten persönlichen elektronischen Gerät (20) empfangen wurden; und
- eine Kommunikationskette (13, 34, 24) vom ersten persönlichen elektronischen Gerät (10) zum zweiten persönlichen elektronischen Gerät (20), konfiguriert, sodass, wenn die auf dem ersten persönlichen elektronischen Gerät (10) installierte Anwendung (A10) dem Fernserver (30) Daten sendet, die die zweite E-Mail-Adresse (EM2) und Übertragungsanweisungen (T3) von Informationen (K3; P10) bezüglich des Fahrzeugs (3) enthalten, dann der Fernserver (30) dem Cloud (40) Daten sendet, die die zweite mobile Kennung (ID20) und die Informationen (K3; P10) bezüglich des Fahrzeugs (3) enthalten, und anschließend der Cloud (40) die Informationen (K3; P10) bezüglich des Fahrzeugs (3) an die auf dem zweiten persönlichen elektronischen Gerät (20) installierte Anwendung (A20) sendet.

10. Anwendung (A10; A20), konfiguriert, um auf einem persönlichen elektronischen Gerät (10; 20) installiert und ausgeführt zu werden, wobei die Anwendung (A10; A20) Codeabschnitte zur Ausführung der Schritte 1b) bis 1d) oder 2b) bis 2d) sowie Codeabschnitte zur Ausführung der Schritte 3a) und 3c) der Methode gemäß Anspruch 1 umfasst, wenn die Anwendung (A10; A20) auf dem persönlichen elektronischen Gerät (10; 20) ausgeführt wird.

## Claims

1. Method for exchanging data between users (1; 2) of a vehicle (3), including a primary user (1) having a first personal electronic device (10) and a secondary user (2) having a second personal electronic device (20), the method including a preparatory phase comprising the following steps:
1a) a first email address (EM1) belonging to the primary user (1) is registered in the first personal electronic device (10), and a dedicated application (A10) is installed on the first personal electronic device (10);
1b) the application (A10) installed on the first personal electronic device (10) connects to cloud computing (40);
1c) cloud computing (40) assigns a first mobile identifier (ID10) to the application (A10) installed on the first personal electronic device (10);
1d) the application (A10) installed on the first personal electronic device (10) sends data to a remote server (30) including the first email address (EM1) and the first mobile identifier (ID10);
2a) a second email address (EM2) belonging to the secondary user (2) is registered in the second personal electronic device (20), and a dedicated application (A20) is installed on the second personal electronic device (20);
2b) the application (A20) installed on the second personal electronic device (20) connects to cloud computing (40);
2c) cloud computing (40) assigns a second mobile identifier (ID20) to the application (A20) installed on the second personal electronic device (20);
2d) the application (A20) installed on the second personal electronic device (20) sends data to the remote server (30) including the second email address (EM2) and the second mobile identifier (ID20);
the method further including a transmission phase comprising the following steps:
3a) the application (A10) installed on the first personal electronic device (10) sends data to the remote server (30) including the second email address (EM2) and transfer instructions (T3) of information (K3; P10) related to the vehicle (3);
3b) the remote server (30) sends data to cloud computing (40) including the second mobile identifier (ID20) and the information (K3; P10) related to the vehicle (3);
3c) cloud computing (40) sends the information (K3; P10) related to the vehicle (3) to the application (A20) installed on the second personal electronic device (20).

2. Method according to claim 1, **characterized in that** in step 3c), cloud computing (40) uses the second mobile identifier (ID20) to identify a temporary identifier (IP20) temporarily assigned to the second personal electronic device (20), then uses this temporary identifier (IP20) to send the information (K3; P10) related to the vehicle (3) to the second personal electronic device (20).

3. Method according to one of the preceding claims, **characterized in that** the preparatory phase also includes a step 1e) in which the remote server (30) sends certain data (K3, P3) related to the vehicle (3) to the first personal electronic device (10).

4. Method according to one of the preceding claims, **characterized in that** the information (K3; P10) related to the vehicle (3) includes customizable parameters (P10) of the vehicle (3), including for example the position of the seats, the setting of the air conditioning and heating device, and the programming of the radio.

5. Method according to one of the preceding claims, **characterized in that** the vehicle (3) is equipped with a keyless entry device (4), and **in that** the information (K3; P10) related to the vehicle (3) includes an identification key (K3) which, once received by the application (A10; A20) installed on the first personal electronic device (10) or the second personal electronic device (20), authorizes a connection to the keyless entry device (4) to access the vehicle (3).

6. Method according to one of the preceding claims, **characterized in that** the first personal electronic device (10) and/or the second personal electronic device (20) is a mobile phone.

7. Method according to one of the preceding claims, **characterized in that** the first personal electronic device (10) and/or the second personal electronic device (20) is an electronic watch.

8. Method according to one of the preceding claims, **characterized in that** the first personal electronic device (10) and/or the second personal electronic device (20) is a digital tablet.

9. System (100) for exchanging data between users (1; 2) of a vehicle (3), including a primary user (1) and a secondary user (2), the system (100) comprising:
- a vehicle (3) operable by the primary user (1) or the secondary user (2);
- a first personal electronic device (10) portable by the primary user (1) and configured to store a first email address (EM1) belonging to the primary user (1) and to execute a dedicated application (A10);
- a second personal electronic device (20) portable by the secondary user (2) and configured to store a second email address (EM2) belonging to the secondary user (2) and to execute a dedicated application (A20);
- cloud computing (40) configured to assign, on the one hand, a first mobile identifier (ID10) to the application (A10) installed on the first personal electronic device (10) and, on the other hand, a second mobile identifier (ID20) to the application (A20) installed on the second personal electronic device (20);
- a remote server (30) configured to store data including the first email address (EM1) and the first mobile identifier (ID10) received from the first personal electronic device (10), as well as the second email address (EM2) and the second mobile identifier (ID20) received from the second personal electronic device (20); and
- a communication chain (13, 34, 24) from the first personal electronic device (10) to the second personal electronic device (20), configured such that when the application (A10) installed on the first personal electronic device (10) sends data to the remote server (30) including the second email address (EM2) and transfer instructions (T3) of information (K3; P10) related to the vehicle (3), then the remote server (30) sends data to cloud computing (40) including the second mobile identifier (ID20) and the information (K3; P10) related to the vehicle (3), then cloud computing (40) sends the information (K3; P10) related to the vehicle (3) to the application (A20) installed on the second personal electronic device (20).

10. Computer application (A10; A20), configured to be installed and then executed on a personal electronic device (10; 20), the application (A10; A20) comprising code portions for executing steps 1b) to 1d) or 2b) to 2d), as well as code portions for executing steps 3a) and 3c) of the method according to claim 1, when the application (A10; A20) is executed on the personal electronic device (10; 20).
